# EUROPÄISCHE PATENTSCHRIFT

(11) **EP 3 901 714 B1**
(45) Veröffentlichungstag und Bekanntmachung des Hinweises auf die Patenterteilung: **17.07.2024**
(21) Anmeldenummer: 21164325.9
(22) Anmeldetag: 23.03.2021
(51) Int. Cl.: G05B 19/042, H04L 9/32, G06F 21/64, G06F 21/70, H04L 9/08

(54) **VERFAHREN ZUR ÜBERPRÜFUNG DER AUTHENTIZITÄT VON ELEKTRONISCHEN MODULEN EINES MODULAR AUFGEBAUTEN FELDGERÄTS DER AUTOMATISIERUNGSTECHNIK**
METHOD FOR VERIFYING THE AUTHENTICITY OF ELECTRONIC MODULES OF A MODULAR FIELD DEVICE OF AUTOMATION TECHNOLOGY
PROCÉDÉ DE VÉRIFICATION DE L'AUTHENTICITÉ DE MODULES ÉLECTRONIQUES D'UN APPAREIL DE TERRAIN MODULAIRE DE LA TECHNIQUE D'AUTOMATISATION

(30) Priorität: 22.04.2020 DE 102020111019
(43) Veröffentlichungstag der Anmeldung: 27.10.2021
(73) Patentinhaber: Endress + Hauser Conducta GmbH+Co. KG, 70839 Gerlingen (DE)
(72) Erfinder: Alber, Thomas, 70567 Stuttgart (DE); Kilian, Markus, 79249 Merzhausen (DE); Pöschmann, Axel, 4057 Basel (DE); Bihler, Sascha, 79618 Rheinfelden (DE); Merklin, Simon, 79353 Bahlingen a. K. (DE)
(74) Vertreter: Trenkle, Dennis

(56) Entgegenhaltungen:
- EP-A1- 2 806 599
- DE-A1- 102017 111 928
- US-A1- 2004 003 227

## Beschreibung

Die Erfindung betrifft ein Verfahren zur Überprüfung der Authentizität von elektronischen Modulen eines modular aufgebauten Feldgeräts der Automatisierungstechnik.

In der Prozessautomatisierung ebenso wie in der Fertigungsautomatisierung werden vielfach Feldgeräte zur Erfassung und/oder Beeinflussung von physikalischen, chemischen oder biologischen Prozessgrößen eingesetzt. Zur Erfassung der Prozessgrößen dienen Messgeräte. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung der Prozessgrößen werden Aktorsysteme verwendet. Beispiele für Aktoren sind Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind. Im Zusammenhang mit der Erfindung werden als Feldgeräte alle Geräte bezeichnet, die in der Nähe des Prozesses oder der Anlage eingesetzt werden und die prozess- oder anlagerelevante Informationen liefern oder verarbeiten.

Entsprechende Feldgeräte bestehen üblicherweise aus einer Vielzahl von elektronischen Modulen, wie z.B. Steckmodulen mit Leiterkarten, Sensoren mit digitaler Anbindung, usw. Erfolgt der Austausch oder das Hinzufügen eines elektronischen Moduls, so wird heute nicht geprüft, ob das elektronische Modul authentisch ist. Aktuell wird ein elektronisches Modul üblicherweise visuell überprüft und nach positiver Sichtinspektion als authentisch hingenommen.

Die zuvor beschriebene Vorgehensweise birgt ein beachtliches Sicherheitsrisiko: Da im Prinzip keine Möglichkeit besteht, ein wie auch immer geartetes ggf. manipuliertes elektronisches Modul zu erkennen, besteht die Gefahr, dass ein ggf. manipuliertes elektronisches Modul in einer Anlage der Automatisierungstechnik eingebaut wird. Erfüllt das elektronische Modul z.B. nicht die Anforderungen für den Einsatz in einem explosionsgefährdeten Bereich, kommt aber in einem solchen Bereich zum Einsatz, so kann dies durchaus lebensbedrohende Auswirkungen haben.

Die vorliegende Patentanmeldung beschreibt ein Verfahren zur Sicherstellung der Modul-Authentizität: Ist das Modul tatsächlich das Modul, das es vorgibt zu sein. Hier geht es primär darum, zu prüfen, ob ein bestimmtes Modul vorhanden ist, wobei hier die Identität gerprüft wird und baugleiche Module nicht automatisch akzeptiert werden. In einer parallel zu dieser Patentanmeldung eingereichten Patentanmeldung der Anmelderin wird die Hersteller-Authentizität geprüft, d.h. ob ein elektronisches Modul von einem Originalhersteller oder von einem vertrauenswürdigen Dritten bzw. einem Zulieferer stammt. Selbstverständlich könnten auch beide Verfahren gleichzeitig oder nacheinander zur Überprüfung eines elektronischen Moduls eingesetzt werden.

Die EP 2 806 599 A1 offenbart ein Verfahen zum Hinzufügen eines drahtlosen Geräts in ein Drahtlosnetzwerk, wobei ein erstes und ein zweites Zertifikat sowie ein erster und ein zweiter öffetlicher Schlüsse verwendet werden.

Die DE 10 2017 111928 A1 umfasst ein Verfahren zur autorisierten Aktualisierung einer ersten Betriebssoftware eines Feldgeräts, wobei eine Authentifizierungsprüfung einer zweiten, mittels eines ersten privaten, der Anlage zugeordneten, Schlüssels signierten Betriebssoftware für das Feldgerät, durchgeführt wird, wobei im Falle, dass die Authentifizierungsprüfung erfolgreich durchgeführt wurde, die auf dem Feldgerät befindliche erste Betriebssoftware zumindest teilweise durch die zweite Betriebssoftware ersetzt wird.

Die US 2004/00327 A1 offenbart ein Verfahren, in welchem ein Fahrzeug eine potentielle Komponente zur Verwendung in dem Fahrzeug authentifiziert, indem es von einer Zertifizierungsstelle eine Zertifizierung erhält, dass eine authentische Komponente mit einem kryptographischen Schlüssel verbunden ist. Die Zertifizierung bescheinigt, dass der kryptografische Schlüssel an Informationen gebunden ist, die die authentische Komponente identifizieren. Das Fahrzeug verwendet den von der Zertifizierungsstelle erhaltenen kryptografischen Schlüssel in der kryptografischen Kommunikation mit der potentiellen Komponente und bestimmt, ob die potentielle Komponente die authentische Komponente ist, basierend darauf, ob der kryptografische Schlüssel erfolgreich in der kryptografischen Kommunikation verwendet wird.

Der Erfindung liegt die Aufgabe zugrunde, eine nicht-authentisches elektronisches Modul automatisch zu erkennen.

Die Aufgabe wird durch ein Verfahren zur Überprüfung der Authentizität von elektronischen Modulen eines modular aufgebauten Feldgeräts der Automatisierungstechnik gemäß Patentanspruch 1 gelöst.

Es wird also geprüft, ob jene Modul-Individuen vorhanden sind, die gemäß der Module Trust List vorhanden sein sollten. Wird ein elektronisches Modul ersetzt oder hinzugefügt, so wird dies mit dem erfindungsgemäßen Verfahren erkannt. Die Einbindung in den Betrieb wird verweigert, wenn das elektronische Modul seine Authentizität nicht nachweisen kann.

Gemäß der Erfindung überprüft ein Feldgerät also, bevor es ein ausgetauschtes oder hinzugefügtes elektronisches Modul in die zum Betrieb des Feldgeräts erforderliche Kommunikation miteinbezieht, ob der Public Key des elektronischen Moduls in der Liste der als vertrauenswürdig gekennzeichneten elektronischen Module enthalten ist. Die Überprüfung der Authentizität eines elektronischen Moduls erfolgt üblicherweise während der Laufzeit des Feldgeräts.

Das jedem elektronischen Modul zugeordnete Schlüsselpaar wird auch als kryptografische Identität des elektronischen Moduls bezeichnet. Prinzipiell bekannt sind die symmetrische Verschlüsselung und die asymmetrische Verschlüsselung. Während bei der symmetrischen Verschlüsselung Verschlüsselung und Entschlüsselung mit einem identischen Schlüssel erfolgen, geschieht dies bei der asymmetrischen Verschlüsselung mit zwei unterschiedlichen Schlüsseln.

Bei der asymmetrischen Kryptographie werden oftmals RSA-basierte Schlüsselpaare eingesetzt, die sich eventuell in der Schlüssellänge unterscheiden. Aktuell gelten RSA-Schlüssel der Länge 2048 Bit bereits als kritisch; wer mehr Sicherheit benötigt, verwendet Schlüssellängen von 3072 oder gar 4096 Bit. Die zunehmenden Schlüssellängen wirken sich allerdings nicht nur negativ auf den benötigten Speicherplatz aus, sondern es leidet auch die Performance - und zwar sowohl bei der asymmetrischen Ver- und Entschlüsselung als auch und vor allem bei der Schlüsselpaarerzeugung. Deutlich effizienter als die auf Primzahlkörpern basierenden RSA-Kryptosysteme sind solche, die elliptische Kurven verwenden. Dabei haben sich einige wenige EC (elliptic curves) etabliert. Eine davon ist die Curve25519.

Bevorzugt wird in Verbindung mit der Erfindung ein asymmetrisches Schlüsselpaar verwendet. Die asymmetrischen Verschlüsselungsverfahren gelten als sehr sicher, da zwei Schlüssel zum Einsatz kommen, die nicht auseinander ableitbar sind: Ein öffentlicher Schlüssel (Public Key) für die Verschlüsselung und ein privater Schlüssel (Private Key) für die Entschlüsselung oder umgekehrt. Der private Schlüssel bleibt stets beim Erzeuger des Schlüssels. Entweder wird also mit dem privaten Schlüssel verschlüsselt und mit dem öffentlichen Schlüssel entschlüsselt oder umgekehrt.

Weiterhin wird der folgende Verfahrensschritt vorgeschlagen:
Zwecks Überprüfung, ob das elektronische Modul im Besitz des Public Key des geeigneten Schlüsselpaares ist, fordert das Feldgerät oder die mit dem Feldgerät kommunizierenden Einheit den Public Key des ausgetauschten oder hinzugefügten elektronischen Moduls an und überprüft, ob der Public Key des elektronischen Moduls in der Liste der als vertrauenswürdig eingestuften Public Keys gespeichert ist.

Darüber hinaus erfolgt der Test, ob das elektronische Modul im Besitz des Private Key des geeigneten Schlüsselpaares ist. Für diesen Test wird erfindungsgemäß ein Challenge-Response-Verfahren angewendet. Der Umstand, dass ein elektronisches Modul einen vertrauenswürdigen Public Key liefert, beweist noch nicht, dass dieser auch der zu diesem elektronischen Modul gehörige Public Key ist. Schließlich könnte es sich auch um ein Fake-Modul handeln, welches einen sich unrechtmäßig beschafften Public Key verwendet. Daher muss geprüft werden, ob dieses elektronische Modul authentisch ist, d.h. ob der gelieferte Public Key auch tatsächlich diesem elektronischen Modul gehört, ob das elektronische Modul den ihm zugehörigen korrekten Public Key geliefert hat und ob es dies auch beweisen kann. Für diesen Nachweis wird - wie gesagt - bevorzugt das Challenge-Response-Verfahren genutzt.

Hierzu sendet das Feldgerät bzw. eine elektronische Komponente eine beliebige Nachricht an das ausgetauschte oder hinzugefügte elektronische Modul mit der Bitte um Signaturerstellung ("challenge"). Das Modul signiert diese Nachricht und sendet die Signatur ("response") an das Feldgerät bzw. an das anfragende elektronische Modul zurück. Das Feldgerät bzw. das anfragende elektronische Modul kann nun anhand der Signatur prüfen, ob das elektronische Modul im Besitz des korrekten Private Keys ist.

Die Erstellung der Signatur erfolgt beispielhaft folgendermaßen: Das Modul k wendet auf die Nachricht m ein Hashverfahren an und verschlüsselt den erhaltenen Hashwert mit seinem Private Key. Das Feldgerät entschlüsselt die erhaltene Signatur mit dem Public Key des Moduls und vergleicht dies mit einem selbst berechneten Hashwert der gesendeten Nachricht. Im Idealfall sind beide Hashwerte identisch, was beweist, dass a) das Modul die Wahrheit gesagt hat, da es den korrekten Public Key gesendet hat und b) dass es dies auch beweisen kann, da es den zugehörigen Private Key besitzt. Mit der Erbringung dieses Nachweises gilt das ausgetauschte oder hinzugefügte elektronische Modul als authentisch. Zur Signaturerstellung sind darüber hinasu auch spezielle Algorithmen (DSA ECDSA, etc.) bekannt geworden, die letztlich aber ebenfalls mit einem asymmetrischen Schlüsselpaar arbeiten.

Hat ein elektronisches Modul nun kein geeignetes Schlüsselpaar oder nur eines, welches auf einer anderen Kurve oder auf einem anderen Kryptosystem basiert, so kann es an dem Challenge Response Verfahren nicht teilnehmen. Abhilfe ist möglich, wenn dieses elektronische Modul über einen Generator verfügt, mit Hilfe dessen ein solches geeignetes Schlüsselpaar erzeugt werden kann; alternativ muss es über eine entsprechende Schnittstelle und einen Schlüsselspeicher verfügen, so dass ggf. ein extern erzeugtes Schlüsselpaar in das elektronische Modul nachträglich eingeschrieben werden kann. In beiden Fällen muss das Modul aber die passendenden / zugehörigen Operationen, z.B. das Verschlüsseln mit dem private Key, beherrschen.

Zusammengefasst wird dem ausgetauschten oder hinzugefügten elektronischen Modul - insbesondere vom Feldgerät - eine beliebige Nachricht als Challenge gesendet mit der Bitte um Signaturerstellung mit dem Private Key. Das elektronische Modul signiert die Nachricht mit seinem Private Key und sendet die Signatur als Response zurück. Anhand der Signatur wird überprüft, ob das elektronische Modul im Besitz des Private Key des geeigneten Schlüsselpaares ist. Jedes Schlüsselpaar, im Sinne einer asymmetrischen Kryptographie, ist als geeignet anzusehen. Gebräuchlich sind RSA- oder EC-basierte Schlüsselpaare. Ein Schlüsselpaar ist ein Werkzeug. Ein solches Schlüsselpaar wird nun von dem Feldgerät verwendet, um die Authentizität des elektronischen Moduls festzustellen.

"Geeignet" kann im konkreten Fall noch eingeschränkt werden: Sowohl das Feldgerät also auch das elektronische Modul müssen die jeweiligen Operationen (Verschlüsseln, Entschlüsseln) mit dem Schlüsselpaar beherrschen. Kann das Feldgerät z.B. nur EC und das Modul nur RSA, dann funktioniert die Erfindung nicht. Kann das elektronische Modul überhaupt keine asymmetrische Kryptographie, dann existiert auch kein geeignetes Schlüsselpaar.

Nachfolgend werden einige Spezialfälle beschrieben: Ergibt die Überprüfung, dass das ausgetauschte oder hinzugefügte elektronische Modul kein Schlüsselpaar aufweist, so wird überprüft, ob ein Schlüsselpaar für das elektronische Modul erzeugt oder bereitgestellt werden kann,
wobei in dem Fall, dass das Schlüsselpaar von einem weiteren elektronischen Modul bereitgestellt bzw. erzeugt wird, das Schlüsselpaar an das ausgetauschte oder hinzugefügte elektronische Modul übergeben wird.

Weiterhin wird im Zusammenhang mit der Erfindung vorgeschlagen, dass ein ausgetauschtes oder hinzugefügtes elektronische Modul, das kein geeignetes Schlüsselpaar besitzt oder für das kein geeignetes Schlüsselpaar erzeugt werden kann, von der Kommunikation ausgeschlossen bleibt.

Erfindungsgemäß wird, im Falle, dass die Überprüfung ergibt, dass das ausgetauschte oder hinzugefügte elektronische Modul ein Schlüsselpaar besitzt, dass der Public Key des Schlüsselpaares aber nicht in der Liste gespeichert ist, obwohl das elektronische Modul authentisch zu sein scheint, der Public Key des erzeugten Schlüsselpaars der Liste der als vertrauenswürdig eingestuften elektronischen Module zugeordnet, sobald eine autorisierte Person die Vertrauenswürdigkeit des elektronischen Moduls bestätigt hat.

Auch in dem Fall, dass für das elektronische Modul ein geeignetes Schlüsselpaar erzeugt werden kann, wird der Public Key des Schlüsselpaares in der Liste der als vertrauenswürdig eingestuften elektronischen Module gespeichert, wenn eine autorisierte Person die Vertrauenswürdigkeit des elektronischen Moduls bestätigt. So kann die Liste größer werden und die Publik Keys mehrerer elektronischer Module enthalten. Natürlich ist es sinnvoll, bei Modultausch, den Public Key des ausgetauschten Moduls aus der Module Trust List zu entfernen.

Hat ein elektronisches Modul kein geeignetes Schlüsselpaar oder nur eines, welches auf einer anderen Kurve oder auf einem anderen Kryptosystem basiert, so kann es an dem Challenge Response Verfahren nicht teilnehmen. Um ein geeignetes Schlüsselpaar zu erzeugen, ist es erforderlich, dass dieses elektronische Modul über einen Generator verfügt, mit Hilfe dessen ein solches (geeignetes) Schlüsselpaar erzeugt werden kann, oder aber es muss über ein Interface und einen Schlüsselspeicher verfügen, so dass ein extern erzeugtes Schlüsselpaar in das elektronische Modul eingeschrieben werden kann. In beiden Fällen muss das elektronische Modul aber die passendenden / zugehörigen Voraussetzungen und Operationen (z.B. Verschlüsseln mit dem Private Key) beherrschen.

Es ist vorgesehen, dass die elektronischen Module vom Original-Hersteller oder einem vom Original-Hersteller autorisierten Dritten während des Produktionsprozesses oder bei einem Service-Einsatz mit jeweils einem geeigneten Schlüsselpaar versehen werden; weiterhin wird der Public Key des geeigneten Schlüsselpaare zu dem entsprechenden Zeitpunkt in der Liste der als vertrauenswürdig eingestuften elektronischen Module gespeichert. Bei der Produktion oder später durch Modultausch oder Modulergänzung wird dem Feldgerät durch eine vertrauenswürdige Person mitgeteilt, dass das getauschte oder hinzugefügte elektronische Modul als vertrauenswürdig zu betrachten ist. Dabei übernimmt das Feldgerät den Public Key des elektronischen Moduls in seine Module Trust List MTL.

Beim Austausch eines elektronischen Moduls wird der Public Key des ersetzten elektronischen Moduls aus der Liste der als vertrauenswürdig eingestuften elektronischen Module gelöscht.

Wie bereits zuvor erwähnt, kann die Überprüfung bzw. der Test, ob das elektronische Modul authentisch ist, während des laufenden Betriebs des Feldgeräts durchgeführt.

Erwähnt wurde ebenfalls bereits, dass in Verbindung mit der Erfindung anstelle des Public Key des elektronischen Moduls eine Ableitung, z.B. ein Hashwert, oder eine anderweitige unabhängige und eindeutige Identifikation verwendet werden kann.

Die Erfindung wird anhand der nachfolgenden Figuren näher erläutert. Es zeigt:
Fig. 1: eine schematische Darstellung eines Feldgeräts mit mehreren elektronischen Modulen, das zur Durchführung des erfindungsgemäßen Verfahrens geeignet ist, und
Fig. 2: ein Flussdiagramm, das das erfindungsgemäße Verfahren mit unterschiedlichen Weiterbildungen beschreibt.

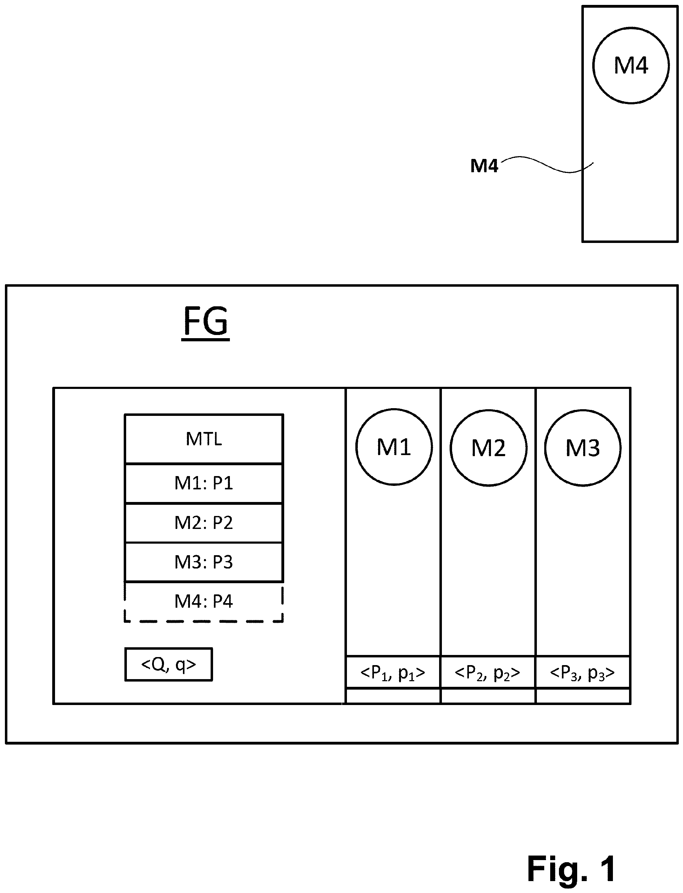

Fig. 1 zeigt eine schematische Darstellung eines Feldgeräts FG mit mehreren elektronischen Modulen Mk, das zur Durchführung des erfindungsgemäßen Verfahrens geeignet ist. Das Feldgerät FG weist im dargestellten Fall drei elektronische Module Mk mit k = 1, 2, 3 auf. Jedem elektronischen Modul Mk des Feldgeräts FG ist ein geeignetes Schlüsselpaar Pk, pk mit k = 1, 2, 3 zugeordnet. Dieses geeignete Schlüsselpaar Pk, pk ist Voraussetzung dafür, dass das zugehörige elektronische Modul Mk seine Authentizität bestätigen kann. Jedes Schlüsselpaar Pk, pk besteht aus einem Public Key Pk und einem Private Key pk. Weiterhin sind die Public Keys Pk der geeigneten Schlüsselpaare Pk, pk in einer Liste MTL gespeichert, wobei die Liste MTL dem Feldgerät FG oder einer mit dem Feldgerät FG kommunizierenden Einheit U zugeordnet ist. MTL ist die Abkürzung für Module Trust List. Die Liste enthält die Public Keys Pk der als vertrauenswürdig eingestuften elektronischen Module Mk. Nur wenn die Prüfungsschritte entsprechend dem erfindungsgemäßen Verfahren und/oder seiner weiteren Ausgestaltungen positiv beschieden werden, wird ein ausgetauschtes oder neu hinzugefügtes elektronisches Modul Mk funktionstüchtig in das Feldgerät FG eingebunden.

Auch dem Feldgerät ist ein eigenes Schlüsselpaar Q, q bestehend aus Public Key Q und Private Key q zugeordnet. Das Feldgerät FG kann bei Bedarf den Public Key Q an ein oder mehrere elektronischen Module Mk übermitteln, um z.B. ein geheimes Wissen zwischen Feldgerät FG und elektronischem Modul Mk zu ermitteln und dieses (oder eine Ableitung davon) als symmetrischen Schlüssel für eine verschlüsselte Kommunikation zu verwenden (Stichwort: "Diffie-Hellman", Austausch der Public Keys). Möglich ist es auch, dass sich nicht nur das elektronische Modul Mk gegenüber dem Feldgerät FG ausweisen muss, sondern auch das Feldgerät FG gegenüber dem elektronischen Modul Mk. Hat ein elektronisches Modul Mk z.B. viele sensible (geheime) Daten gespeichert, so soll es diese möglicherweise nur einem oder nur bestimmten Feldgeräten FG mitteilen können. Hierzu müsste jedes elektronische Modul Mk über eine gespeicherte Field Device Trust List verfügen, in der die Public Keys der als vertrauenswürdig eingestuften Feldgeräte FGk gelistet sind.

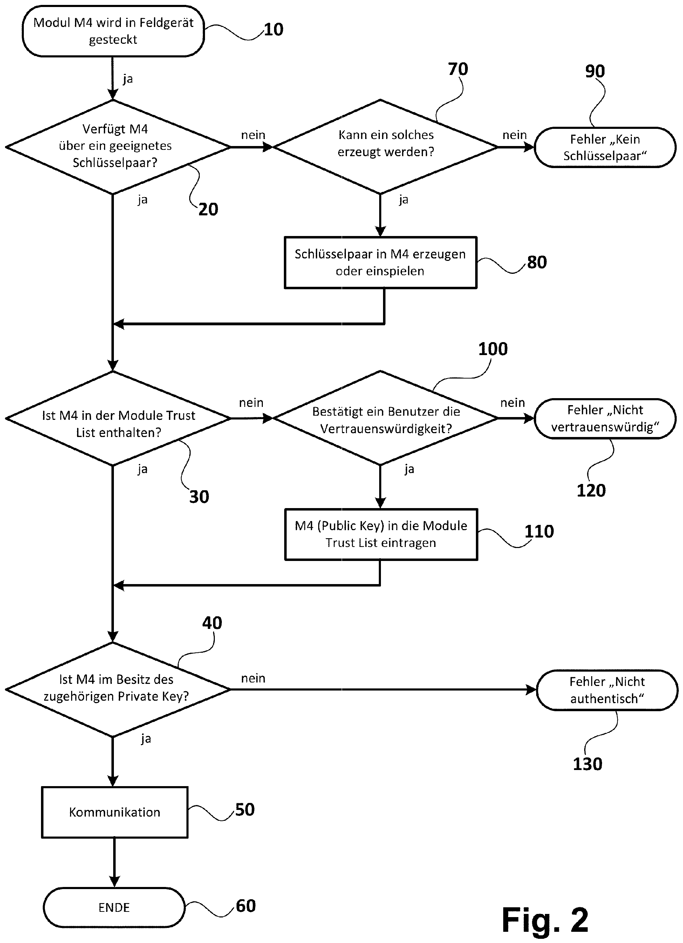

Fig. 2 zeigt ein Flussdiagramm, das das erfindungsgemäße Verfahren mit unterschiedlichen Weiterbildungen beschreibt.

Unter dem Programmpunkt 10 wird ein neues elektronisches Modul Mk, z.B. Mod3neu, anstelle z.B. des elektronischen Moduls Mod3 eingesteckt; alternativ wird ein neues Modul Mk, z.B. das elektronische Modul Mod4, neu hinzugefügt. Unter dem Programmpunkt 20 wird überprüft, ob das neue elektronische Modul Mk über ein geeignetes Schlüsselpaar Pk, pk verfügt. Ist dies der Fall, so wird unter dem Programmpunkt 30 geprüft, ob der Public Key Pk des ausgetauschten oder hinzugefügten elektronischen Moduls Mk. Mk in der Liste MTL der Public Keys Pk aufgeführt ist. Ist die Prüfung positiv, wird bei Programmpunkt 40 gecheckt, ob das neue elektronische Modul Mk im Besitz des korrekten Private Key pk ist. Ist diese Überprüfung positiv, so wird eine die Funktionalität des Feldgeräts FG betreffende Kommunikation oder Interaktion des ausgetauschten oder hinzugefügten elektronischen Moduls Mk mit dem Feldgerät FG oder einem anderweitigen elektronischen Modul Mk des Feldgeräts FG zugelassen. Die Überprüfung wird bei Programmpunkt 60 beendet. Möglich ist es auch, dass die Überprüfung von einer separaten Einheit ausgeführt wird. Diese ist in der Fig.2 nicht gesondert dargestellt.

Zwecks Überprüfung, ob das elektronische Modul Mk im Besitz des Public Key Pk des geeigneten Schlüsselpaares Pk, pk ist - was bei Programmpunkt 30 festgestellt wird - fordert das Feldgerät FG oder die mit dem Feldgerät FG kommunizierenden Einheit U den Public Key Pk des ausgetauschten oder hinzugefügten elektronischen Moduls Mk an und überprüft, ob der Public Key Pk des elektronischen Moduls Mk in der Liste MTL gespeichert ist.

Die Überprüfung, ob das elektronische Modul Mk auch im Besitz des korrekten Private Key pk des geeigneten Schlüsselpaares Pk, pk ist (Programmpunkt 40), erfolgt über ein Challenge-Response-Verfahren. Hierzu wird dem ausgetauschten oder hinzugefügten elektronischen Modul Mk insbesondere vom Feldgerät FG eine beliebige Nachricht m als Challenge gesendet mit der Bitte um Signaturerstellung mit dem vorhandenen Private Key pk. Das elektronische Modul Mk signiert die Nachricht m mit seinem Private Key pk und sendet die Signatur als Response zurück. Anhand der Signatur wird überprüft, ob das elektronische Modul Mk im Besitz des korrekten Private Key pk des geeigneten Schlüsselpaares Pk, pk ist. Dies ist der Fall, wenn die Nachricht m nach Ver- und Entschlüsselung wieder die Nachricht m ist.

Schauen wir uns an, was passiert, wenn die Überprüfungen unter einem der den Programmpunkte 20, 30 oder 40 ein negatives Ergebnis liefern.

Ergibt die Überprüfung unter Programmpunkt 20, dass das elektronische Modul Mk über kein geeignetes Schlüsselpaar Pk, pk verfügt, so wird überprüft, ob ein Schlüsselpaar Pk, pk für das elektronische Modul Mk erzeugt oder bereitgestellt werden kann (Programmpunkt 70). In dem Fall, dass das Schlüsselpaar Pk, pk von dem Feldgerät FG oder einem weiteren elektronischen Modul Mk bereitgestellt bzw. erzeugt werden kann (Programmpunkt 80), wird das Schlüsselpaar Pk, pk an das ausgetauschte oder hinzugefügte elektronische Modul Mk übergeben. Möglich ist auch, dass das ausgetauschte oder hinzugefügte Modul Mk selbst ein geeignetes Schlüsselpaar Pk, pk erzeugt. Hierzu muss es über geeignete technische Voraussetzungen verfügen. Eine Speicherung des Public Keys Pk in der Liste MTL erfolgt, sobald eine autorisierte Person die Vertrauenswürdigkeit des elektronischen Moduls Mk bestätigt hat.

Für den Fall, dass das elektronische Modul Mk kein geeignetes Schlüsselpaar Pk, pk besitzt oder dass kein geeignetes Schlüsselpaar Pk, pk für das elektronische Modul Mk erzeugt werden kann (Programmpunkt 70), bleibt das elektronische Modul Mk von der Kommunikation ausgeschlossen. Ggf. wird eine Fehlermeldung generiert, dass das elektronische Modul Mk kein geeignetes Schlüsselpaar Pk, pk besitzt (Programmpunkt 90).

Falls der Public Key Pk des ausgetauschten oder hinzugefügten Moduls Mk nicht in der Liste MTL enthalten ist (Programmpunkt 30) und ein autorisierter Nutzer die Vertrauenswürdigkeit des elektronischen Moduls Mk nicht bestätigt, wird eine Fehlermeldung ausgegeben, dass das elektronische Modul Mk nicht vertrauenswürdig ist (Programmpunkt 120). Das Feldgerät FG bindet das ausgetauschte oder hinzugefügte Modul nicht in die Kommunikation ein.

Ergibt der Challenge Response Test unter Programmpunkt 40, dass das elektronische Modul nicht im Besitz des korrekten Private Key pk ist, so wird unter dem Programmpunkt 130 eine Fehlermeldung generiert, dass das elektronische Modul Mk nicht authentisch ist.

Durch das erfindungsgemäße Verfahren ist es möglich, die korrekte Identität eines elektronischen Moduls Mk sicher nachzuweisen. Fake-Module können ausgesondert werden.

## Patentansprüche

1. Verfahren zur Überprüfung der Authentizität von elektronischen Modulen (Mk) eines modular aufgebauten Feldgeräts (FG) der Automatisierungstechnik wobei jedem elektronischen Modul (Mk mit k = 1, 2, ... n) des Feldgeräts (FG) ein geeignetes Schlüsselpaar (Pk, pk mit k = 1, 2....n) zugeordnet wird, das die Identität des elektronischen Moduls (Mk) bestätigt, wobei jedes Schlüsselpaar (Pk, pk) aus einem Public Key (Pk) und einem Private Key (pk) besteht, und wobei die Public Keys (Pk) von den geeigneten Schlüsselpaaren (Pk, pk) in einer Liste (MTL) gespeichert werden, wobei die Liste (MTL) dem Feldgerät (FG) oder einer mit dem Feldgerät (FG) kommunizierenden Einheit (U) zugeordnet ist, wobei das Verfahren die folgenden Verfahrensschritte aufweist:
- beim Austausch oder beim Hinzufügen eines elektronischen Moduls (Mk) wird von dem Feldgerät (FG) oder von der mit dem Feldgerät (FG) kommunizierenden Einheit (U) überprüft:
- ob das ausgetauschte oder hinzugefügte elektronische Modul (Mk) ein Schlüsselpaar (Pk, pk) aufweist, und
- ob der Public Key (Pk) des ausgetauschten oder hinzugefügten elektronischen Moduls in der Liste (MTL) der Public Keys (Pk) aufgeführt ist,
- ob das elektronische Modul (Mk) im Besitz des korrekten Private Key (pk) ist, wobei der Test, ob das elektronische Modul (Mk) im Besitz des Private Key (pk) des geeigneten Schlüsselpaares (Pk, pk) ist, über ein Challenge-Response-Verfahren erfolgt,
- eine die Funktionalität des Feldgeräts betreffende Kommunikation oder Interaktion des ausgetauschten oder hinzugefügten elektronischen Moduls (Mk) mit dem Feldgerät (FG) oder einem anderweitigen elektronischen Modul (Mk) wird zugelassen, wenn die Überprüfung mit positivem Ergebnis abgeschlossen wird,
- Ergibt die Überprüfung, dass das ausgetauschte oder hinzugefügte elektronische Modul (Mk) kein Schlüsselpaar (Pk, pk) aufweist, so wird überprüft, ob ein Schlüsselpaar (Pk, pk) für das elektronische Modul (Mk) erzeugt oder bereitgestellt werden kann,
wobei in dem Fall, dass das Schlüsselpaar (Pk, pk) von einem weiteren elektronischen Modul (Mk) bereitgestellt bzw. erzeugt wird, das Schlüsselpaar (Pk, pk) an das ausgetauschte oder hinzugefügte elektronische Modul (Mk) übergeben wird.

2. . Verfahren nach Anspruch 1 mit folgendem Verfahrensschritt:
Zwecks Überprüfung, ob das elektronische Modul (Mk) im Besitz des Public Key (Pk) des geeigneten Schlüsselpaares (Pk, pk) ist, fordert das Feldgerät (FG) oder die mit dem Feldgerät (FG) kommunizierenden Einheit (U) den Public Key (Pk) des ausgetauschten oder hinzugefügten elektronischen Moduls (Mk) an und überprüft, ob der Public Key (Pk) des elektronischen Moduls (Mk) in der Liste (MTL) gespeichert ist.

3. . Verfahren nach Anspruch 1 mit folgenden Verfahrensschritten:
Dem ausgetauschten oder hinzugefügten elektronischen Modul (Mk) wird insbesondere vom Feldgerät (FG) eine beliebige Nachricht (m) als Challenge gesendet mit der Bitte um Signaturerstellung mit dem Private Key (pk),
das elektronische Modul (Mk) signiert die Nachricht (m) mit seinem Private Key (pk) und sendet die Signatur als Response zurück,
anhand der Signatur wird überprüft, ob das elektronische Modul (Mk) im Besitz des Private Key (pk) des geeigneten Schlüsselpaares (Pk, pk) ist.

4. . Verfahren nach Anspruch 1 mit folgendem Verfahrensschritt:
Für den Fall, dass das elektronische Modul (Mk) kein geeignetes Schlüsselpaar (Pk, pk) besitzt oder dass kein geeignetes Schlüsselpaar (Pk, pk) für das elektronische Modul (Mk) erzeugt werden kann, bleibt das elektronische Modul (Mk) von der Kommunikation ausgeschlossen.

5. . Verfahren nach einem oder mehreren der vorhergehenden Ansprüche mit folgenden Verfahrensschritten:
Ergibt die Überprüfung, dass das ausgetauschte oder hinzugefügte elektronische Modul (Mk) ein Schlüsselpaar (Pk, pk) besitzt, dass der Public Key (Pk) des Schlüsselpaares (Pk, pk) aber nicht in der Liste (MTL) gespeichert ist, wird der Public Key (Pk) des erzeugten Schlüsselpaars (Pk, pk) der Liste (MTL) zugeordnet, wenn eine autorisierte Person (A) die Vertrauenswürdigkeit des elektronischen Moduls (Mk) bestätigt.

6. . Verfahren nach Anspruch 1 mit folgenden Verfahrensschritten:
für den Fall, dass für das elektronische Modul (Mk) ein geeignetes Schlüsselpaar (Pk, pk) erzeugt werden kann, wird der Public Key (Pk) des Schlüsselpaares (Pk, pk) in der Liste (MTL) gespeichert ist, wenn eine autorisierte Person (A) die Vertrauenswürdigkeit des elektronischen Moduls (Mk) bestätigt.

7. . Verfahren nach einem oder mehreren der vorhergehenden Ansprüche mit folgenden Verfahrensschritten:
- die elektronischen Module (Mk) werden vom Original-Hersteller oder einem vom Original-Hersteller autorisierten Dritten während des Produktionsprozesses oder bei einem Service-Einsatz mit jeweils einem geeigneten Schlüsselpaar (Pk, pk) versehen, und
und die Public Keys (Pk) der geeigneten Schlüsselpaare (Pk, pk) werden in der Liste (MTL) gespeichert.

8. . Verfahren nach einem oder mehreren der vorhergehenden Ansprüche mit folgendem Verfahrensschritt:
Beim Austausch eines elektronischen Moduls (Mk) wird der Public Key (Pk) des ersetzten elektronischen Moduls (Mk) aus der Liste (MTL) gelöscht.

9. . Verfahren nach einem oder mehreren der vorhergehenden Ansprüche mit folgendem Verfahrensschritt:
Die Überprüfung und der Test werden während des laufenden Betriebs des Feldgeräts (FG) durchgeführt.

10. . Verfahren nach einem oder mehreren der vorhergehenden Ansprüche mit folgendem Verfahrensschritt:
Anstelle des Public Key (Pk) des elektronischen Moduls (Mk) wird eine Ableitung, z.B. ein Hashwert, oder eine anderweitige unabhängige und eindeutige Identifikation verwendet.

## Claims

1. Method for checking the authenticity of electronic modules (Mk) of a modular field device (FG) in automation technology
where each electronic module (Mk with k = 1, 2, ... n) of the field device (FG) has a suitable key pair (Pk, pk with k = 1, 2....n) is assigned, which confirms the identity of the electronic module (Mk), wherein each key pair (Pk, pk) consists of a public key (Pk) and a private key (pk), and wherein the public keys (Pk) of the suitable key pairs (Pk, pk) are stored in a list (MTL), wherein
the list (MTL) to the field device (FG) or one with the field device (FG) communicating unit (U), the method comprising the following method steps:
- When replacing or adding an electronic module (Mk), the field device (FG) or the unit (U) communicating with the field device (FG)
checked:
- whether the replaced or added electronic module (Mk) has a key pair (Pk, pk), and
- whether the public key (Pk) of the replaced or added electronic module is included in the list (MTL) of public keys (Pk),
- whether the electronic module (Mk) is in possession of the correct private key(pk), whereby a challenge-response procedure is used to test whether the electronic module (Mk) is in possession of the private key (pk) of the suitable key pair (Pk, pk),
- a communication or interaction of the field device concerning the functionality of the replaced or added electronic module (Mk) with the field device (FG) or another electronic module (Mk) is permitted if the check is completed with a positive result,
- If the check shows that the replaced or added electronic module (Mk) does not have a key pair (Pk, pk), the system checks whether a key pair (Pk, pk) can be generated or provided for the electronic module (Mk), wherein, in the event that the key pair (Pk, pk) is provided or generated by a further electronic module (Mk), the key pair (Pk, pk) is transferred to the replaced or added electronic module (Mk).

2. Method according to claim 1 with the following process step:
In order to check whether the electronic module (Mk) is in possession of the public key (Pk) of the suitable key pair (Pk, pk), the field device (FG) or the unit (U) communicating with the field device (FG) requests the public key (Pk) of the replaced or added electronic module (Mk) and checks whether the public key (Pk) is in the possession of the suitable key pair (Pk, pk).
of the electronic module (Mk) is stored in the list (MTL).

3. Method according to claim 1 with the following method steps:
In particular, the field device (FG) sends any message (m) as a challenge to the replaced or added electronic module (Mk) with the request for
Signature creation with the private key (pk),
the electronic module (Mk) signs the message (m) with its private key (pk) and sends the signature back as a response,
The signature is used to check whether the electronic module (Mk) is in possession of the private key (pk) of the appropriate key pair (Pk, pk).

4. Method according to claim 1 with the following method step:
In the event that the electronic module (Mk) does not have a suitable key pair (Pk, pk) or that no suitable key pair (Pk, pk) can be generated for the electronic module (Mk), the electronic module (Mk) remains excluded from communication. excluded.

5. Method according to one or more of the preceding claims, comprising the following method steps:
If the check shows that the replaced or added electronic module (Mk) has a key pair (Pk, pk), but that the public key (Pk) of the key pair (Pk, pk) is not stored in the list (MTL), the public key (Pk) of the generated key pair (Pk, pk) is assigned to the list (MTL) if an authorized person (A) confirms the trustworthiness of the electronic module (Mk).

6. Method according to claim 1 with the following process steps:
in the event that a suitable key pair (Pk, pk) can be generated for the electronic module (Mk), the public key (Pk) of the key pair (Pk, pk) is stored in the list (MTL) if an authorized person (A) confirms the trustworthiness of the electronic module (Mk).

7. Method according to one or more of the preceding claims, comprising the following method steps:
- the electronic modules (Mk) are manufactured by the original manufacturer or a third party authorized by the original manufacturer during the production process or in the case of Each service insert is provided with a suitable key pair (Pk, pk), and
and the public keys (Pk) of the suitable key pairs (Pk, pk) are stored in the list (MTL).

8. Method according to one or more of the preceding claims, comprising the following method step:
When an electronic module (Mk) is replaced, the public key (Pk) of the replaced electronic module (Mk) is deleted from the list (MTL).

9. Method according to one or more of the preceding claims, comprising the following method step:
The inspection and test are carried out while the field device (FG) is in operation.

10. Method according to one or more of the preceding claims, comprising the following method step:
Instead of the public key (Pk) of the electronic module (Mk), a derivation, e.g. a hash value, or another independent and unique identification is used.

## Revendications

1. Méthode de contrôle de l'authenticité des modules électroniques (Mk) d'un appareil de terrain modulaire (FG) dans les techniques d'automatisation
où chaque module électronique (Mk avec k = 1, 2, ... n) de l'appareil de terrain (FG) a un une paire de clés appropriée (Pk, pk avec k = 1, 2....n) est attribuée, qui confirme l'identité du module électronique (Mk), dans laquelle chaque paire de clés (Pk, pk) consiste en une clé publique (Pk) et une clé privée (pk), et dans laquelle les clés publiques (Pk) des paires de clés appropriées (Pk, pk) sont stockées dans une liste (MTL), dans laquelle la liste (MTL) au dispositif de terrain (FG) ou un avec le dispositif de terrain (FG) unité de communication (U), la méthode comprenant les étapes suivantes :
- Lors du remplacement ou de l'ajout d'un module électronique (Mk), du dispositif de terrain (FG) ou de l'unité (U) communiquant avec le dispositif de terrain (FG) vérifié :
- si le module électronique remplacé ou ajouté (Mk) possède une paire de clés (Pk, pk), et
- si la clé publique (Pk) du module électronique remplacé ou ajouté figure dans la liste (MTL) des clés publiques (Pk),
- si le module électronique (Mk) est en possession de la bonne clé privée (pk), par laquelle une procédure de défi-réponse est utilisée pour vérifier si le module électronique (Mk) est en possession de la clé privée (pk) de la paire de clés appropriée (Pk, pk),
- une communication ou une interaction de l'appareil de terrain concernant la fonctionnalité de l'appareil de terrain.
Le remplacement ou l'ajout d'un module électronique (Mk) par le dispositif de terrain (FG) ou un autre module électronique (Mk) est autorisé si le contrôle donne un résultat positif,
- Si le contrôle montre que le module électronique remplacé ou ajouté (Mk) n'a pas de paire de clés (Pk, pk), le système vérifie si une paire de clés (Pk, pk) peut être générée ou fournie pour le module électronique (Mk),
dans lequel, si la paire de clés (Pk, pk) est fournie ou générée par un autre module électronique (Mk), la paire de clés (Pk, pk) est transférée au module électronique remplacé ou ajouté (Mk).

2. Méthode selon la revendication 1 avec l'étape suivante :
Afin de vérifier si le module électronique (Mk) est en possession de la clé publique (Pk) de la paire de clés appropriée (Pk, pk), le dispositif de terrain (FG) ou l'unité (U) communiquant avec le dispositif de terrain (FG) demande la clé publique (Pk) du module électronique (Mk) remplacé ou ajouté et vérifie si la clé publique (Pk) est en possession de la paire de clés appropriée (Pk, pk).
du module électronique (Mk) est enregistré dans la liste (MTL).

3. Méthode selon la revendication 1 avec les étapes suivantes :
En particulier, le dispositif de terrain (FG) envoie un message quelconque (m) comme défi au module électronique remplacé ou ajouté (Mk) avec la demande de Création de la signature avec la clé privée (pk),
le module électronique (Mk) signe le message (m) avec sa clé privée (pk) et renvoie la signature en réponse,
La signature est utilisée pour vérifier si le module électronique (Mk) est en possession de la clé privée (pk) de la paire de clés appropriée (Pk, pk).

4. Méthode selon la revendication 1 avec l'étape suivante :
Si le module électronique (Mk) ne dispose pas d'une paire de clés appropriée (Pk, pk) ou si aucune paire de clés appropriée (Pk, pk) ne peut être générée pour le module électronique (Mk), le module électronique (Mk) reste exclu de la communication. exclu.

5. Méthode selon l'une ou plusieurs des revendications précédentes, comprenant les étapes suivantes :
Si le contrôle montre que le module électronique remplacé ou ajouté (Mk) possède une paire de clés (Pk, pk), mais que la clé publique (Pk) de la paire de clés (Pk, pk) n'est pas stockée dans la liste (MTL), la clé publique (Pk) de la paire de clés générée (Pk, pk) est attribuée à la liste (MTL) si une personne autorisée (A) confirme la fiabilité du module électronique (Mk).

6. Méthode selon la revendication 1 avec les étapes suivantes du processus :
si une paire de clés appropriée (Pk, pk) peut être générée pour le module électronique (Mk), la clé publique (Pk) de la paire de clés (Pk, pk) est stockée dans la liste (MTL) si une personne autorisée (A) confirme la fiabilité du module électronique (Mk).

7. Méthode selon l'une ou plusieurs des revendications précédentes, comprenant les étapes suivantes :
- les modules électroniques (Mk) sont fabriqués par le fabricant d'origine ou par un tiers autorisé par le fabricant d'origine au cours du processus de production ou dans le cas de Chaque insert de service reçoit une paire de clés appropriée (Pk, pk), et
et les clés publiques (Pk) des paires de clés appropriées (Pk, pk) sont stockées dans la liste (MTL).

8. Méthode selon l'une ou plusieurs des revendications précédentes, comprenant l'étape suivante :
Lorsqu'un module électronique (Mk) est remplacé, la clé publique (Pk) du module électronique remplacé (Mk) est supprimée de la liste (MTL).

9. Méthode selon l'une ou plusieurs des revendications précédentes, comprenant l'étape suivante :
L'inspection et l'essai sont effectués lorsque l'appareil de terrain (FG) est en fonctionnement.

10. Méthode selon l'une ou plusieurs des revendications précédentes, comprenant l'étape suivante :
Au lieu de la clé publique (Pk) du module électronique (Mk), on utilise une dérivation, par exemple une valeur de hachage, ou une autre identification indépendante et unique.
